# EUROPEAN PATENT APPLICATION

(11) **EP 2 735 224 A1**
(43) Date of publication of application: **28.05.2014**
(21) Application number: 12818459.5
(22) Date of filing: 18.07.2012
(51) Int. Cl.: A01K 1/01

(54) **URINATING POST FOR DOGS**

(30) Priority: 19.07.2011 ES 201130780 U
(71) Applicant: Gálvez Escobar, Ivan, 08640 Olesa de Montserrat (Barcelona) (ES)
(72) Inventor: Gálvez Escobar, Ivan, 08640 Olesa de Montserrat (Barcelona) (ES)
(74) Representative: Espiell Volart, Eduardo Maria
(86) International application number: PCT/ES2012/000210
(87) International publication number: WO 2013/014304

(57) **Abstract**

Urinating post for dogs that comprises a column, a urine-detection system, a treat dispenser, a dog-identification system constituted by a chip reader, a system for transmitting the information gathered and which has, in the lower part thereof, a perimeter line of spraying devices, a water dispenser, al least one solar panel in the upper part thereof, and a treat and bag dispenser with a "purse" system. The column is affixed to a plinth where there is a layer of filtering material, a layer of deodorizing material and a layer of absorbent material.

## Description

### Field of the invention

The present invention relates to a post that dogs use for urinating, characterised in that it is provided with appropriate devices such that, once the animal has performed its physiological function, it immediately and automatically receives a treat as a reward for going precisely there to do so. Obtaining this treat as a reward creates in the dog a habit that can be use to concentrate the action of urinating in that place, preventing the animal from doing so in other different places, soiling street furniture, walls and/or floors. The essential characteristics of the urinating post are described below.

An essential characteristics of the described post is that it is provided with appropriate and sufficient elements to guarantee permanent cleaning, of its base and also its surroundings, firstly through adequate watering of the lower part of the post and secondly through the particular disposition of the zone at ground level, in the form of a plinth, on which the post is anchored, essentially constituted by absorbent and deodorizing materials which prevent the build-up and/or dispersion of urines, therefore maintaining the base of the post being described in perfectly clean conditions.

Another essential characteristic of the object of this invention is that it has a microchip reader situated on the lower part of the post, in such a way as to be able to read the code assigned to the animal by the previously implanted chip, in accordance with the regulations on keeping and controlling pet animals. The reading of the data contained on the chip carried by the dog that visits the post to urinate allows the corresponding municipal services to control the animal's tendency to visit the established place.

Finally, the post, which as mentioned in the previous paragraph, automatically dispenses a treat for the dog, once it has finished urinating, will have the appropriate coin service, along with a dispenser for issuing the corresponding receipt, so that the animal's owner can purchase, optionally, there and then, more treats should they wish, or handy bags for collecting excrements, as an additional optional service.

It does not need to be said that the automatic and immediate dispensation of the treat when the animal has finished urinating is carried out only once and with a single unit of the treats contained in the post's dispenser.

At the same time, the device of this invention will have adequate sensors for controlling the action of urinating and when it concludes.

With a view to describing the object of this invention in more detail, a series of drawings are attached, in which by way of a practical, non-limiting example, an embodiment of the urinating post for dogs described herein has been represented.

In said drawings,

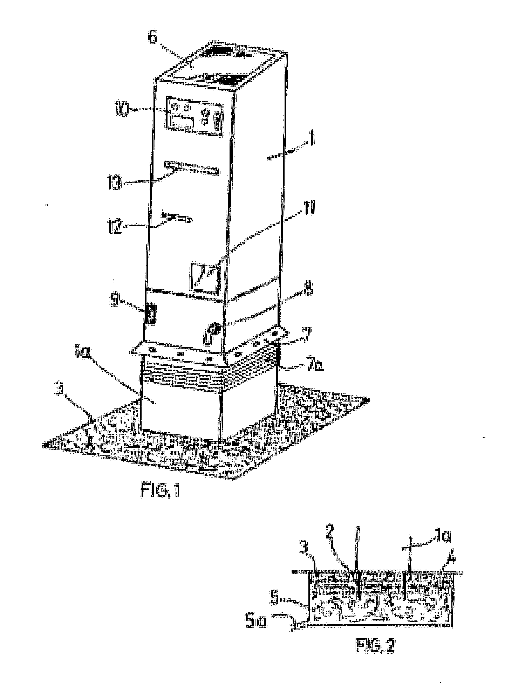

- fig. 1: is a view in perspective of the whole of the post; and
- fig. 2: is a close-up, in cross-section and to a smaller scale of the lower part of the post and the ground on which said post is installed;

According to these drawings, the urinating post for dogs of the present invention consists of a vertical body, preferably quadrangular prismatic (1), which, for greater ease of construction and the location of the different devices it is provided with, has a distinct lower part, or the height of this part will generally correspond to the average height of dogs.

The body (1/1a) is secured, thanks to appropriate anchorings (2) to a flooring that surrounds the post in the form of a plinth, generally quadrangular in shape, and which presents a first upper layer of filtering material (3), which prevents the formation of a puddle, and which is easily replaceable. Below it is a layer of deodorizing material (4), also easily replaceable, and presenting the option of the material being self-degradable. Finally, the flooring or plinth is completed with a final layer of absorbent material situated in a previously buried container deposit, and provided with an optional drain pipe (5a) connected to the drainage system.

On the upper part of the body (1) and with the appropriate tilt, based on the incidence of the sunlight on the place where the post is installed, there is a solar panel (6) for self-powering the different elements with which the post is equipped.

On the lower part (1a) of the post there is a perimeter line of spraying devices (7) for cleaning, disinfecting and deodorizing the lower part of the outer faces of the body (1 a) precisely in the area that the dog approaches to urinate, all of the above in such a way that the surface of the post always remains clean. An adequate device causes the discharge of cleaning liquid through the aforementioned spraying devices (7) either once the dog has finished urinating, or regularly after a preset time.

In the same lower area, where there are transversal slits (7a) facing upwards, to serve for the animal urines to enter, preferably an easily replaceable deodorizing mat will be placed.

Also, and preferably above the line of spraying devices (7), there is a water dispenser (8) for providing drink water if required.

Finally, also in that lower area (1 a) there is a reader (9) of the code inscribed on the chip that dogs approaching the post must necessarily have, for the purpose of carrying out an adequate statistical control and database thereof.

Through an adequate control, either using the reader (9) or humidity, temperature or weight sensors, situated inside the first layer (3) of the material of the plinth surrounding the post, the devices that the post has proceed to actuate the spraying devices (7) in addition to the treat dispenser for the reward.

On the upper front part of the body (1) there is a control panel (10) with an entrance for coins and various signs in the form of a "display" together with other informative elements. Complementarily there is an exit (11) for treats that the dog automatically receives after urinating, and also for the user to collect treats dispensed following the purchase made by entering the coins in the coin slot (10) collecting the corresponding receipt from a dispenser (12) upon express request.

For the complementary service of the user, or dog owner, by introducing coins through the coin slot (10) they will be able to obtain bags for collecting excrements through another dispenser (13).

Having sufficiently described the object of the invention, it must be stated that any variation in sizes, shapes, finishes, and also materials employed in the practical embodiment of the post and its component parts, shall in no way alter its essential nature, as summarised in the following claims.

## Claims

1. Urinating post for dogs, **characterised in that** it comprises a column (1/1a) having a urine-detection system, and a treat dispenser (11).

2. Urinating post for dogs, according to claim 1, **characterised in that** it has a dog-identification system, preferably constituted by a chip reader (9).

3. Urinating post for dogs, according to claim 2, **characterised in that** it has a system for transmitting the information gathered by the dog-identification system (9)

4. Urinating post for dogs, according to the preceding claims, **characterised in that** on the lower part (1a) of the body (1) there is a perimeter line of spraying devices (7).

5. Urinating post for dogs, according to the preceding claims, **characterised in that** on the lower part (1a) of the body there are one or more slots facing upwards (7a) disposed around or on part of said lower part (1 a), behind which there is preferably a deodorizing mat.

6. Urinating post for dogs, according to the preceding claims, **characterised in that** preferably on the lower part (1 a) there is a water dispenser (8) for drink water.

7. Urinating post for dogs, according to the preceding claims, **characterised in that** it preferably has on the upper part of the body (1) at least one solar panel.

8. Urinating post for dogs, according to the preceding claims, **characterised in that** preferably on the front of the upper part (1) there is a control panel (10) with an entrance for coins and exits for dispensing treats (11), receipts (12) and bags (13) for collecting excrements.

9. Urinating post for dogs, according to the preceding claims, **characterised in that** the flooring zone, in the form of a plinth, on which the post is secured has a layer of filtering material (3).

10. Urinating post for dogs, according to claim, **characterised in that** the flooring zone, in the form of a plinth, has below the layer of filtering material (3) a layer of deodorizing material (4), in addition to a layer of absorbent material (5), all of which appears in a buried container connected by a drain pipe (5a) to the general drainage system.
